# EUROPEAN PATENT APPLICATION

(11) **EP 2 927 713 A1**
(43) Date of publication of application: **07.10.2015**
(21) Application number: 14842866.7
(22) Date of filing: 19.06.2014
(51) Int. Cl.: G02B 5/00, G02B 5/08, G02B 27/22

(54) **METHOD FOR FABRICATION OF PHOTO-CONTROL PANEL COMPRISING PHOTO-REFLECTOR PARTS WHICH ARE POSITIONED IN PARALLEL**

(30) Priority: 06.09.2013 JP 2013185192
(71) Applicant: Asukanet Company, Ltd., Hiroshima-shi, Hiroshima 731-0138 (JP)
(72) Inventor: OTSUBO Makoto, Hiroshima-shi, Hiroshima 731-0138 (JP)
(74) Representative: Vossius & Partner Patentanwälte Rechtsanwälte mbB
(86) International application number: PCT/JP2014/066300
(87) International publication number: WO 2015/033645

(57) **Abstract**

There are a first step of preparing a transparent concave-convex plate material 16, one side of which having grooves 18 of square cross-section formed by parallel embankments 17, a second step of covering top surfaces 19 of the embankments 17 and bottom surfaces 20 of the grooves 18 with pieces of resin peelable by ultraviolet irradiation 22, 23, a third step of vapor-depositing a metal on the obverse surface of the concave-convex plate material 16 having the top surfaces 19 of the embankments 17 and the bottom surfaces 20 of the grooves 18 covered with the pieces of the resin peelable by ultraviolet irradiation 22, 23, and a fourth step of removing, by irradiating ultraviolet light from the reverse surface of the concave-convex plate material 16, the pieces of the resin peelable by ultraviolet irradiation 22, 23 having the surfaces thereof vapor-deposited by the metal.

## Description

### TECHNICAL FIELD

The present invention relates to an optical imaging apparatus in which a first light control panel and a second light control panel each formed by arranging belt-like planar light-reflective portions (mirror surfaces) at a constant pitch are used, and to a method for producing the first light control panel and the second light control panel at a low cost.

### BACKGROUND ART

As an optical imaging apparatus that forms a volumetric image by using light (scattered light) radiated from the surface of an object, there is proposed an optical system that is provided with a light-ray inflecting surface consisting of a reflective plane-symmetrical imaging element in which unitary optical elements each having two mutually orthogonal light-reflective-portion integrants are formed in a plurality (in quantity) and regularly on a planar surface, also provided with a light-reflective portion arranged directed to this light-ray inflecting surface, and that forms, at a position mirrored in an unsubstantial virtual mirror transferred to a plane-symmetrical position of the light-reflective portion with respect to the light-ray inflecting surface, an image arranged on an observer's side opposite to the side of the light-reflective portion with the light-ray inflecting surface in between by means of light radiated from an object to be projected passing through the light-ray inflecting surface, reflecting on the light-reflective portion and further passing through the light-ray inflecting surface (see Patent Literature 1).

However, in the case of the optical system described in Patent Literature 1, production of the light-ray inflecting surface consisting of the reflective plane-symmetrical imaging element is extremely difficult, which has impeded the practical application.
The present inventor therefore achieved such an optical imaging method (apparatus) as one described in Patent Literature 2. This optical imaging apparatus 60 is illustrated in FIGS. 5 and 6. The optical imaging apparatus 60 is structured by using a first light control panel 65 and a second light control panel 66, the first light control panel 65 and the second light control panel 66 being formed by arranging a number of belt-like planar light-reflective portions 63 inside a transparent flat plate 61 and perpendicularly to a surface on one side of the transparent flat plate 61 and by arranging a number of belt-like planar light-reflective portions 64 inside a transparent flat plate 62 and perpendicularly to a surface on one side of the transparent flat plate 62, respectively, and making one side of each of the first and the second light control panels 65 and 66 face to face with each other while the planar light-reflective portions 63 of the first light control panel 65 and the planar light-reflective portions 64 of the second light control panel 66 are in an orthogonal state.

By reflected light rays j1 and j2 formed through making light rays h1 and h2 from an object N incident upon the planar light-reflective portions 63 of the first light control panel 65 and making reflected light rays k1 and k2 having reflected on the planar light-reflective portions 63 re-reflect on the planar light-reflective portions 64 of the second light control panel 66, an image of the object N can be formed on the opposite side of the optical imaging apparatus 60 as a real image N'.

### CITATION LIST

### Patent Literature

Patent Literature 1: Japanese Unexamined Patent Application Publication No. 2008-158114
Patent Literature 2: Japanese Patent No. 4865088

### SUMMARY OF INVENTION

### Technical Problem

The optical imaging method described in Patent Literature 2 requires the preparation of the first light control panel 65 provided with the planar light-reflective portions 63 at a constant pitch and the second light control panel 66 provided with the planar light-reflective portions 64 at a constant pitch. In the case of a method for producing the first and the second light control panels 65 and 66, as described in Patent Literature 2, ones thinly cut off from a laminated body formed by laminating plates of a transparent material (e.g., glass plates, transparent plastic plates) each having either both sides or one side treated with light-reflective-portion treatment are used.

However, angles of cutout surfaces and thicknesses of adhesion layers of the first and the second light control panels 65 and 66 are prone to nonuniformity, and due to this, there has been a problem in that a formed real image N' becomes distorted in some cases.
Additionally, since the light control panels are produced by slicing a laminated body, cut surfaces need to be re-ground and re-polished, which has made it difficult to produce them in quantity.

The present invention has been made in view of the above circumstances, and an object thereof is to provide a method for producing a light control panel provided with parallelly-arranged light-reflective portions optimally usable in the formation of planar light-reflective portions arranged parallel and at constant intervals.

### Solution to Problem

In order to achieve the above object, a method for producing a light control panel provided with parallelly-arranged light-reflective portions (hereinafter in some cases also referred to as "a method for producing a light control panel") according to the present invention includes:
a first step of preparing a transparent concave-convex plate material, one side of the transparent concave-convex plate material having grooves of square cross-section formed by parallel embankments;
a second step of covering top surfaces of the embankments and bottom surfaces of the grooves with pieces of resin peelable (removable) by ultraviolet irradiation;
a third step of vapor-depositing a metal on the obverse surface of the concave-convex plate material having the top surfaces of the embankments and
the bottom surfaces of the grooves covered with the pieces of resin peelable by ultraviolet irradiation; and
a fourth step of removing, by irradiating ultraviolet light from the reverse surface of the concave-convex plate material, the pieces of the resin peelable by ultraviolet irradiation having the top surfaces thereof vapor-deposited by the metal, and
light-reflective portions become formed on opposed and parallel side surfaces of the grooves.

Here, the grooves in the concave-convex plate material can be formed by 1) forming a layer of ultraviolet curable resin by coating one side of a plate-like optical material with ultraviolet curable resin to an even thickness, 2) covering the top of the layer of ultraviolet curable resin with a mask having parallel slits, irradiating ultraviolet light (parallel light is preferable) from above the mask, and alternately forming exposed portions and unexposed portions, and 3) removing the mask and further removing the unexposed portions through processing.

The concave-convex plate material can alternatively be formed by pressing a piece of transparent plastic or glass by using a patterned forming roller and a plain columnar roller.
Additionally, the concave-convex plate material can also be formed by, for example, injection-molding transparent thermoplastic inside a mold.

In the case of the method for producing a light control panel provided with parallelly-arranged light-reflective portions according to the present invention, after the fourth step, a transparent material can be filled in the grooves (a fifth step). It is preferable to grind and polish the obverse and the reverse surfaces of the concave-convex plate material having the grooves filled with the transparent material (a sixth step). An even and flat surface can thereby be formed on the obverse and the reverse surfaces of the concave-convex plate material. Here, the plate-like optical material can be formed by glass, quartz, transparent hard plastic and the like.

Also, by preparing two light control panels produced by the above method, and making face to face with each other and stacking the two light control panels while the light-reflective portions formed on the side surfaces of the grooves of one of the light control panels and those of the other one of the light control panels are in an orthogonal or crossed state, an optical imaging apparatus capable of forming a volumetric image can be formed as well (see Japanese Patent No. 4865088).

In the case of the above invention, it is most preferable for the grooves of constant width and square cross-section to be rectangular in cross-sections. However, if the opposed side surfaces are parallel, the cross-sections can be parallelogram-shaped instead. Additionally, it is preferable for the embankments to have square (including oblong and parallelogram) cross-sections as well.
It is best to use silver having high reflectance as a metal to vapor-deposit, however, other metals (e.g., aluminum, chromium, nickel, titanium, etc.) are also usable.

Moreover, since the bottom surfaces of the grooves become covered with resin peelable by ultraviolet irradiation in the second step, metallic surfaces due to the metal vapor-deposition do not become formed at the lower parts of the grooves. The grooves of square cross-section also include cases where lower parts of the side surfaces of the grooves at which no metal-vapor-deposited surfaces are formed deviate from the square cross-sections and become deformed.

### Advantageous Effects of Invention

In the case of the method for producing a light control panel provided with parallelly-arranged light-reflective portions according to the present invention, since the top surfaces of the embankments and the bottom surfaces of the grooves are covered with the pieces of the resin peelable by ultraviolet irradiation, a metal is vapor-deposited on the top surfaces and side surfaces of the embankments and on the bottom surfaces of the grooves, and the pieces of the resin peelable by ultraviolet irradiation having the top surfaces thereof vapor-deposited by the metal becomes removed by irradiating ultraviolet light from the reverse surface of the concave-convex plate material, parallel mirror surfaces become formed on the side surfaces of the grooves. By this method, a light control panel in which belt-like light-reflective portions are formed on at least one side of the plate-like optical material can easily be produced.

Especially, in a case where the concave-convex plate material is formed by 1) forming a layer of ultraviolet curable resin through coating one side of the plate-like optical material with ultraviolet curable resin to an even thickness, 2) covering the top of the layer of ultraviolet curable resin with a mask having parallel slits, irradiating ultraviolet light from above the mask and alternately forming exposed portions and unexposed portions, and 3) removing the mask and further removing the unexposed portions through processing, high-precision grooves can be formed by relatively simple work. A light control panel for use in an optical imaging apparatus can thereby be produced at a low cost.

In a case where a transparent material is filled in the formed grooves, strength of the light control panel becomes enhanced. Since the obverse and the reverse surfaces of the concave-convex plate material having the grooves filled with the transparent material become ground and polished, a higher-precision light control panel can be obtained.

In the case of the method for producing a light control panel provided with parallelly-arranged light-reflective portions according to the present invention, in a case where the plate-like optical material is a piece of glass or quartz, it is easily obtainable, and a high-precision light control panel can be produced. In the above cases, transparent plastic of the same kind may be used for the plate-like optical material, the embankments and an infill for the grooves.

It is also possible to produce an optical imaging apparatus capable of forming a volumetric image by preparing two light control panels produced by means of the method for producing a light control panel according to the present invention and making the two light control panels face to face with each other while the light-reflective portions formed on the side surfaces of the grooves of one of the light control panels and those of the other one of the light control panels are in an orthogonal or crossed state. This enables the formation of an image being even more downsized and sharper at a low production cost.

### BRIEF DESCRITION OF DRAWINGS

FIGS. 1(A) to 1(G) are explanatory diagrams of steps of a method for producing a light control panel provided with parallelly-arranged light-reflective portions according to a first embodiment of the present invention.
FIGS. 2(A) and 2(B) are explanatory diagrams of embankments and grooves produced by the same method for producing a light control panel.
FIG. 3(A) is a cross-sectional view of an optical imaging apparatus in which light control panels produced by the same method for producing a light control panel are used; and 3(B) is a cross-sectional view of an optical imaging apparatus according to a variation.
FIGS. 4(A) to 4(D) are general flow sheets of a method for producing a light control panel provided with parallelly-arranged light-reflective portions according to a second embodiment of the present invention.

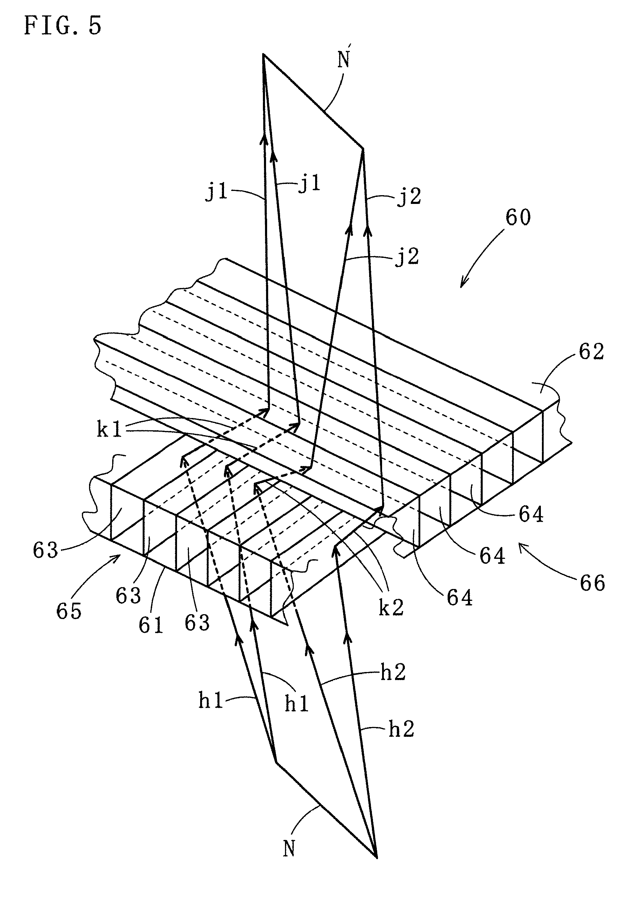

FIG. 5 is an explanatory diagram of an optical imaging apparatus according to a conventional example.

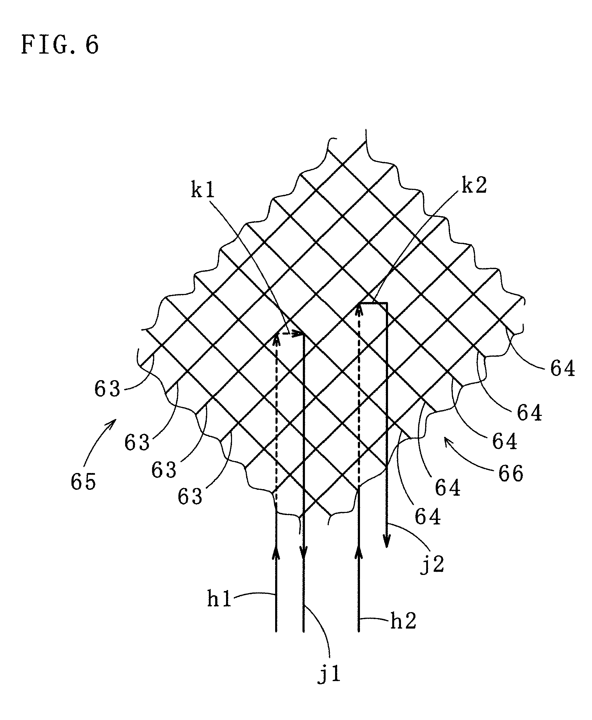

FIG. 6 is an explanatory diagram of the same optical imaging apparatus.

### DESCRIPTION OF EMBODIMENTS

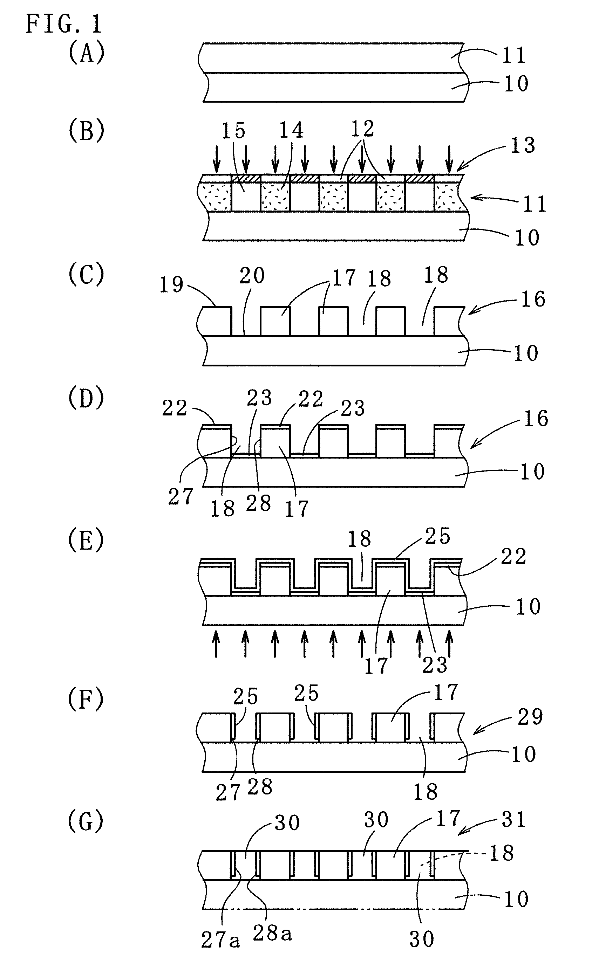

Next, with reference to the accompanying drawings, descriptions will be given on a method for producing a light control panel provided with parallelly-arranged light-reflective portions according to a first embodiment of the present invention.
As illustrated in FIG. 1 (A), a layer of ultraviolet curable resin 11 is formed by coating one side of a glass plate 10, an example of transparent plate-like optical materials, with ultraviolet curable resin to an even thickness (e.g., 10 to 500 µm). A quartz plate or a piece of transparent plastic can be used in place of the glass plate 10. In a case where the glass plate 10 becomes removed or peeled away in a later step, a transparent release layer (e.g., thermoplastic resin) is preliminarily formed on the obverse surface of the glass plate 10.

Next, as illustrated in FIG. 1(B), exposed portions 14 and unexposed portions 15 become formed alternately by covering the top of the layer of ultraviolet curable resin 11 with a mask 13 having parallel slits 12 and irradiating ultraviolet light from above the mask 13.
Here, exposed portions and unexposed portions can also be formed by irradiating, instead of using the mask 13, an image having predetermined slits formed therein with ultraviolet light (by means of so-called photographic method). The width of the slits 12 and each interval (space) between each of the adjacent slits 12 are selectable in the range of, for example, 10 to 200 µm.

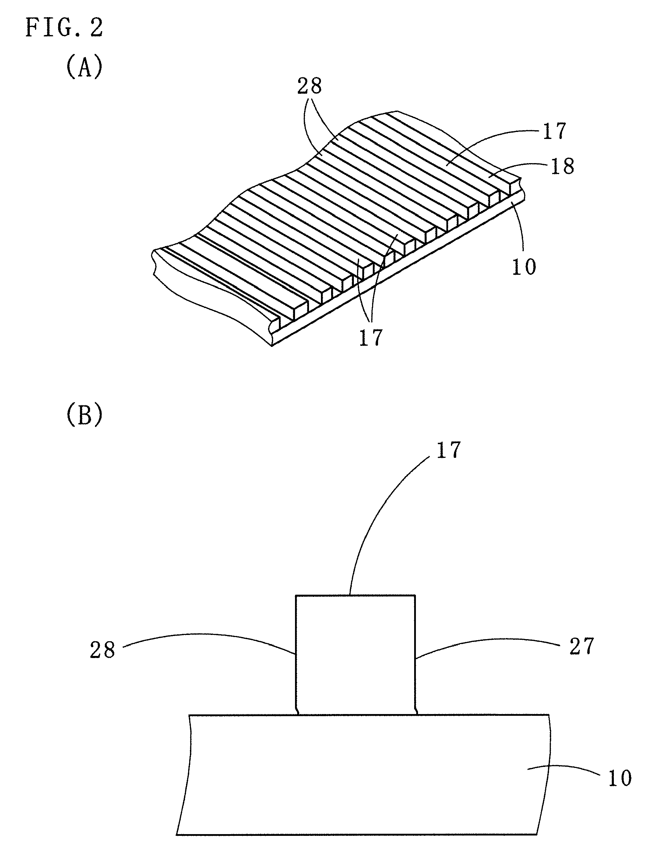

As illustrated in FIG. 1(C), after the exposed portions 14 of the layer of ultraviolet curable resin 11 become cured, by removing the mask 13 and removing the unexposed portions 15 using a solvent (i.e., processing), a transparent concave-convex plate material 16 of which one side has parallel embankments (also referred to as "ribs") 17 and grooves 18 formed by the embankments 17 becomes formed. The embankments 17 and the grooves 18 that have actually been produced are illustrated in FIGS. 2(A) and 2(B). The embankments 17 and the grooves 18 are square in cross-sections, and more preferably, rectangular (oblong) in cross-sections (the above is a first step). As illustrated in FIG. 2(B), in some cases, lower portions of the side surfaces of the grooves 18 deviate from the normal oblongs.

As illustrated in FIG. 1 (D), top surfaces 19 of the embankments 17 and bottom surfaces 20 of the grooves 18 become covered with pieces of resin peelable by ultraviolet irradiation 22 and 23. Here, the pieces of the resin peelable by ultraviolet irradiation 22 and 23 can be formed using a printer and the like (e.g., an inkjet printer). It is preferable for the thickness of the pieces of the resin peelable by ultraviolet irradiation 22 and 23 to be, for example, approximately 1/20 to 1/10 of the depth of the grooves 18. In this case, side surfaces 27 and 28 of the grooves 18 are exposed (the above is a second step).

Next, as illustrated in FIG. 1 (E), on the obverse surface (surface on which concavities and convexities are formed) of the concave-convex plate material 16, a metal having high reflectance such as, for example, Ag, Al, Ni and Ti becomes vapor-deposited. One side of the concave-convex plate material 16 thereby becomes covered with a metal vapor-deposition layer 25. The reverse surface does not become subjected to the vapor-deposition of a metal (the above is a third step).

After this, ultraviolet light is irradiated from the reverse surface of the concave-convex plate material 16. The pieces of the resin peelable by ultraviolet irradiation 22 and 23 formed on the top surfaces 19 of the embankments 17 and the bottom surfaces 20 of the grooves 18 thereby, as illustrated in FIG. 1(F), become peeled away together with the parts of the metal vapor-deposition layer 25 formed on the surfaces of the pieces of the resin peelable by ultraviolet irradiation 22 and 23. This allows for the formation of light-reflective portions (light-reflective layers 27a and 28a) on the opposed and parallel side surfaces 27 and 28 of the grooves 18, completing a light control panel 29 (the above is a fourth step). Here, at the lower portions of the side surfaces 27 and 28, when the pieces of the resin peelable by ultraviolet irradiation 23 become peeled away, parts of the metal vapor-deposition layer 25 on the surfaces of the side surfaces 27 and 28 also become peeled away. Therefore, portions not covered with the metal vapor-deposition layer become formed in the range of approximately 5 to 10% of the height of the embankments 17. This is advantageous since there are distortions at the lower parts of the side surfaces of the embankments 17, which occurred when the embankments 17 are shaped.

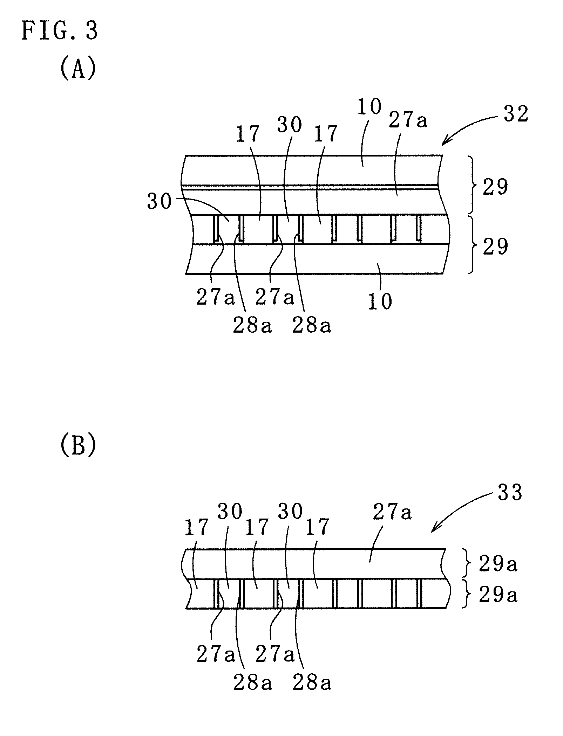

A transparent material 30 that cures by heating, a transparent material 30 that cures by cooling, or a transparent material 30 that self-cures with time can be filled in the grooves 18. This enhances the strength of the light control panel 29 (a fifth step). When the transparent material 30 filled inside has concavities and convexities, the obverse surface or the obverse and the reverse surfaces of the concave-convex plate material 16 become ground and polished, which equips the light control panel 29 with better optical performance (a sixth step).
Additionally, as illustrated in FIG. 1(G), a light control panel 31 can be formed by removing the glass plate 10 while the transparent material 30 is filled in the grooves 18. In this case, when the side surfaces 27 and 28 near the bottom of the grooves 18 are distorted, the distorted portions can be removed by grinding and polishing from the reverse surface side. This makes the light-reflective layers 27a and 28a of the grooves 18 parallel, enabling the formation of light control panels 29a capable of forming a sharp image (volumetric image) (see FIG. 3(B)).

FIG. 3(A) illustrates an optical imaging apparatus 32 formed by making two light control panels 29 face to face with each other while the light-reflective layers 27a and 28a of one of the light control panels 29 and those of the other one of the light control panels 29 are in a crossed (orthogonal) state. FIG. 3(B) illustrates an optical imaging apparatus 33 in which two light control panels 29a each formed by removing the glass plate 10 (plate-like optical material) are used, which enables the formation of an even brighter and sharper image (volumetric image).

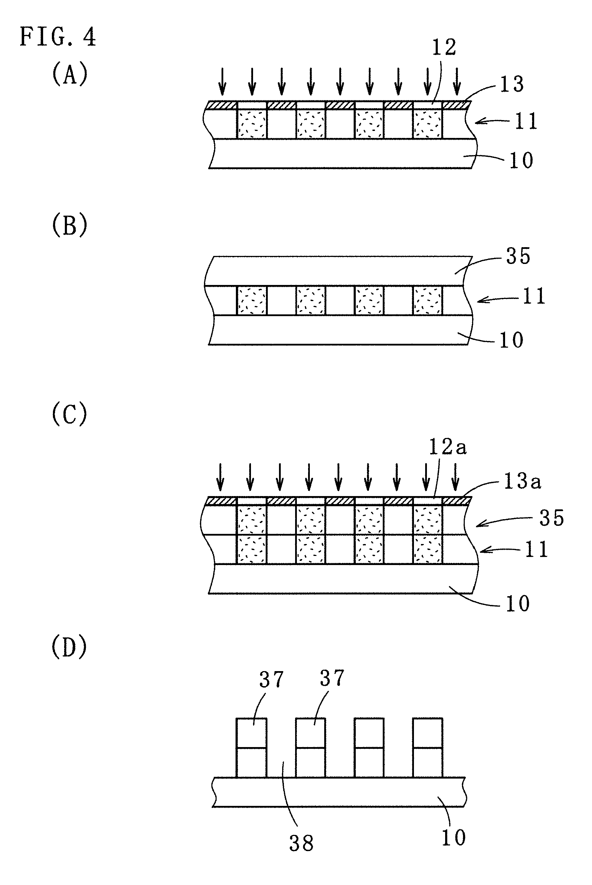

Next, with reference to FIG. 4, concerning a method for producing a light control panel provided with parallelly-arranged light-reflective portions according to a second embodiment of the present invention, descriptions will be given on points different from the method for producing a light control panel according to the first embodiment.
As illustrated in FIG. 4(A), after applying a mask 13 having slits 12 on top of a layer of ultraviolet curable resin 11 and irradiating ultraviolet light, as illustrated in FIG. 4(B), the mask 13 is removed once, and a layer of ultraviolet curable resin 35 is additionally formed on top of the layer of ultraviolet curable resin 11.

Then, a mask 13a having slits 12a is once again overlaid on the layer of ultraviolet curable resin 35. In this case, the positions of the slits 12 of the mask 13 having been placed on the layer of ultraviolet curable resin 11 and the positions of the slits 12a of the mask 13a having been placed on the layer of ultraviolet curable resin 35 must be accurately aligned with one another. After this, as illustrated in FIG. 4(C), ultraviolet-light exposure treatment is performed. Ultraviolet light in this case is parallel light rays.

In this condition, the mask 13a is removed, parts of the ultraviolet curable resin not having been irradiated with the ultraviolet light are removed (processed) using a solvent, and high-height embankments 37 illustrated in FIG. 4(D) are formed. Grooves 38 become formed between each of the embankments 37.
A manner in which a light control panel of which opposed side surfaces of the grooves are light-reflective portions (metallic reflective surfaces) is formed by subsequently applying resin peelable by ultraviolet irradiation on the top surfaces of the embankments 37 and the bottom surfaces of the grooves 38, vapor-depositing a metal on the obverse surface of this concave-convex plate material, and then removing adhered materials on the top surfaces of the embankments 37 and the bottom surfaces of the grooves 38 (the pieces of the resin peelable by ultraviolet irradiation and the metal vapor-deposition layer on top thereof) through irradiating ultraviolet light from the reverse surface is the same as the method for producing a light control panel provided with parallelly-arranged light-reflective portions according to the first embodiment.

In this case, it is preferable to fill a transparent material inside the grooves 38. It is also preferable to remove the plate-like optical material on the reverse surface, grind and polish both sides of the light control panel and make the surfaces even smoother (e.g., surface roughness of 40 nm or less).

In the above embodiments, the concave-convex plate material 16 on which the embankments 17 and the grooves 18 are formed at a predetermined pitch is formed by partially exposing and processing the layer of ultraviolet curable resin. However, it can also be formed by 1) pressing a transparent sheet material between and by a plain columnar roll and a patterned forming roll, 2) performing press-molding in which a template is pressed against a transparent sheet material, or 3) injection molding thermoplastic transparent resin inside a mold. The present invention is applicable in any of these cases.

The present invention is not limited to the above embodiments, and a structure thereof can be changed within the scope of not altering the gist of the present invention. Additionally, it is preferable for the degrees of roughness of side surfaces of grooves to be 10 to 50 nm. However, even when they are rougher than this, they can still be made to be mirror surfaces by performing mirror surface treatment.

### INDUSTRIAL APPLICABILITY

By means of the method for producing a light control panel according to the present invention, light-reflective portions (mirror surfaces) can easily be formed on the side surfaces of grooves of rectangular cross-section. This light control panel can thereby be applied to a volumetric-image display apparatus and other optical apparatuses (e.g., a recursive reflector produced by combining the light control panel with mirrors, etc.), which reduces the overall cost.

### REFERENCE SIGNS LIST

10: glass plate, 11: layer of ultraviolet curable resin, 12, 12a: slit, 13, 13a: mask, 14: exposed portion, 15: unexposed portion, 16: concave-convex plate material, 17: embankment, 18: groove, 19: top surface, 20: bottom surface, 22, 23: resin peelable by ultraviolet irradiation, 25: metal vapor-deposition layer, 27, 28: side surface, 27a, 28a: light-reflective layer, 29, 29a: light control panel, 30: transparent material, 31: light control panel, 32, 33: optical imaging apparatus, 35: layer of ultraviolet curable resin, 37: embankment, 38: groove

## Claims

1. A method for producing a light control panel provided with parallelly-arranged light-reflective portions, comprising:
a first step of preparing a transparent concave-convex plate material, one side of the transparent concave-convex plate material having grooves of square cross-section formed by parallel embankments;
a second step of covering top surfaces of the embankments and bottom surfaces of the grooves with pieces of resin peelable by ultraviolet irradiation;
a third step of vapor-depositing a metal on the obverse surface of the concave-convex plate material having the top surfaces of the embankments and the bottom surfaces of the grooves covered with the pieces of the resin peelable by ultraviolet irradiation; and
a fourth step of removing, by irradiating ultraviolet light from the reverse surface of the concave-convex plate material, the pieces of the resin peelable by ultraviolet irradiation having the top surfaces thereof vapor-deposited by the metal, wherein
light-reflective portions become formed on opposed and parallel side surfaces of the grooves.

2. The method for producing a light control panel provided with parallelly-arranged light-reflective portions according to claim 1, wherein
the grooves in the concave-convex plate material are formed by 1) forming a layer of ultraviolet curable resin by coating one side of a plate-like optical material with ultraviolet curable resin to an even thickness, 2) covering the top of the layer of ultraviolet curable resin with a mask having parallel slits, irradiating ultraviolet light from above the mask, and alternately forming exposed portions and unexposed portions, and 3) removing the mask and further removing the unexposed portions through processing.

3. The method for producing a light control panel provided with parallelly-arranged light-reflective portions according to claim 1 or 2, wherein
after the fourth step, there is a fifth step of filling a transparent material in the grooves.

4. The method for producing a light control panel provided with parallelly-arranged light-reflective portions according to claim 3, wherein
there is a sixth step of grinding and polishing the obverse and the reverse surfaces of the concave-convex plate material having the grooves filled with the transparent material.

5. The method for producing a light control panel provided with parallelly-arranged light-reflective portions according to any one of claims 1 to 4, wherein
by preparing two light control panels produced by means of the method for producing a light control panel and making the two light control panels face to face with each other while the light-reflective portions formed on the side surfaces of the grooves of one of the light control panels and those of the other one of the light control panels are in an orthogonal or crossed state, an optical imaging apparatus capable of forming a volumetric image is formed.

## Amended claims

### Amended claims under Art. 19.1 PCT

1. A method for producing a light control panel provided with parallelly-arranged light-reflective portions, in a method for producing a light control panel formed by arranging a number of belt-like light-reflective portions perpendicularly to a surface on one side of a plate-like optical material and in parallel with one another, comprising:
1) forming a layer of ultraviolet curable resin by coating one side of the plate-like optical material with ultraviolet curable resin to an even thickness, 2) covering the top of the layer of ultraviolet curable resin with a mask having parallel slits, irradiating ultraviolet light from above the mask, and alternately forming exposed portions and unexposed portions, 3) removing the mask and further removing the unexposed portions through processing to form a transparent concave-convex plate material, one side of the concave-convex plate material having grooves of square cross-section formed by parallel embankments, and 4) forming the light-reflective portions by performing mirror surface treatment on side surfaces of the grooves of the concave-convex plate material.

2. The method for producing a light control panel provided with parallelly-arranged light-reflective portions according to claim 1, wherein
the light-reflective portions are formed on the opposed and parallel side surfaces of the grooves by comprising
a first step of covering top surfaces of the embankments of and bottom surfaces of the grooves of the concave-convex plate material, with pieces of resin peelable by ultraviolet irradiation;
a second step of vapor-depositing a metal on the obverse surface of the concave-convex plate material having the top surfaces of the embankments and the bottom surfaces of the grooves covered with the pieces of the resin peelable by ultraviolet irradiation;
a third step of removing, by irradiating ultraviolet light from the reverse surface of the concave-convex plate material, the pieces of the resin peelable by ultraviolet irradiation having the top surfaces thereof vapor-deposited by the metal.

3. The method for producing a light control panel provided with parallelly-arranged light-reflective portions according to claim 2, wherein
after the third step, there is a fourth step of filling a transparent material in the grooves.

4. The method for producing a light control panel provided with parallelly-arranged light-reflective portions according to claim 3, wherein
there is a fifth step of grinding and polishing the obverse and the reverse surfaces of the concave-convex plate material having the grooves filled with the transparent material.

5. The method for producing a light control panel provided with parallelly-arranged light-reflective portions according to any one of claims 1 to 4, wherein
by preparing two light control panels produced by means of the method for producing a light control panel and making the two light control panels face to face with each other while the light-reflective portions formed on the side surfaces of the grooves of one of the light control panels and those of the other one of the light control panels are in an orthogonal or crossed state, an optical imaging apparatus capable of forming a volumetric image is formed.
